# EUROPEAN PATENT APPLICATION

(11) **EP 2 192 325 A1**
(43) Date of publication of application: **02.06.2010**
(21) Application number: 08833309.1
(22) Date of filing: 25.09.2008
(51) Int. Cl.: F16G 5/18, F16H 9/24

(54) **POWER TRANSMISSION CHAIN AND POWER TRANSMISSION DEVICE**

(30) Priority: 27.09.2007 JP 2007250516; 27.09.2007 JP 2007250517
(71) Applicant: JTEKT Corporation, Osaka-shi Osaka 542-8502 (JP)
(72) Inventor: KAMAMOTO, Shigeo, Osaka-shi Osaka 542-8502 (JP); TADA, Seiji, Osaka-shi Osaka 542-8502 (JP)
(74) Representative: Weber, Joachim
(86) International application number: PCT/JP2008/067291
(87) International publication number: WO 2009/041494

(57) **Abstract**

There are provided a power transmission chain which can improve not only noise level but also durability by eliminating unfavorable combinations from a random arrangement of combinations of pitch lengths and pin shapes by paying attention to maximum bending angle and bending angle minimum value and a power transmission system using the same power transmission chain.

With respect to pitch length, links include two types of a link L1 which has a small pitch length and a link L2 which has a large pitch length. With respect to pin shape, pins include two types; a pin P1 of which a curvature of a rolling contact surface is large and a pin P2 of which the curvature of the rolling contact surface is small. A relationship between link element and relative rotation angle is analyzed for various arrangements, and an arrangement in which a maximum bending angle is increased (for example, an arrangement in which (L2, P2) follows directly a combination of (L1, P1) in a chain traveling direction) or an arrangement in which a bending angle minimum value is too small is eliminated.

## Description

### Technical Field

The present invention relates to a power transmission chain and more particularly to a power transmission chain suitable for a continuously variable transmission (CVT) for vehicles such as motor vehicles and a power transmission system.

### Background Art

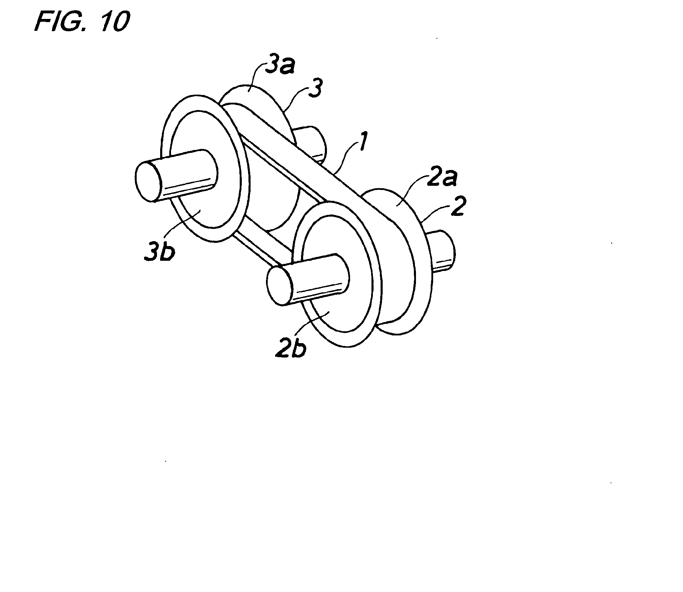

As an automotive continuously variable transmission, there is known a continuously variable transmission as shown in Fig. 10 which comprises a drive pulley (2), having a fixed sheave (2a) and a movable sheave (2b) and provided on an engine's side, a driven pulley (3), having a fixed sheave (3a) and a movable sheave (3b) and provided on a drive wheels' side, and an endless power transmission chain (1) extended between the two pulleys and in which the chain (1) is clamped by means of hydraulic pressure by causing the movable sheaves (2b)(3a) to move towards or away from the fixed sheaves (2a)(3b) by a hydraulic actuator, so that a contact load is generated between the pulleys (2)(3) and the chain (1) by virtue of the clamping force to thereby transmit torque by friction force at the contact portion.

As the power transmission chain, Patent Document 1 proposes a power transmission chain which comprises a plurality of links having front and rear inserting portions through which pins are inserted, and a plurality of first pins and a plurality of second pins for connecting together the links which are aligned in a chain width direction so that the front inserting hole of one link corresponds to the rear inserting hole of the other link so as to allow the links to bend relative to each other in a length direction, wherein the first pin which is fixed in the front inserting portion of one link and is movably fitted in the rear inserting hole in the other link and the second pin which is movably fitted in the front inserting hole in one link and is fixed in the rear inserting hole in the other link are brought into rolling contact motion relative to each other to thereby enable the links to bend relative to each other in the length direction, and to reduce noise and vibration, it is proposed to have two or more pitch lengths of the links, rolling contact surface shapes of the pins and contact positions (offset amounts) of the pins with surfaces of the pulleys.
Patent Document 1: JP-2006-242374

### Disclosure of the Invention

### Problem that the Invention is to Solve

In the power transmission chain described in Patent Document 1 above, the noise level can be reduced by combining the plurality of links having different pitch lengths and the pins having different shapes. However, as pitch lengths and pin shapes are combined at random, there are appearing bending angles of various magnitudes which are formed by adjacent links. In general, since it is understood that a power transmission chain having a large bending angle has a disadvantage with respect to durability, cares are taken, whereas it is considered that there is no disadvantage when the bending angle is small.

An object of the invention is to provide a power transmission chain which can not only reduce the noise level but also improve the durability thereof by eliminating unfavorable arrangements of combinations of pitch length and pin shape from random arrangements thereof by paying attention to maximum bending angle and bending angle minimum value and a power transmission system using the power transmission chain.

### Means for Solving the Problem

According to the invention, there is provided a power transmission chain comprising a plurality of links each having front and rear inserting portions through which pins are inserted and a plurality of first pins and a plurality of second pins which are aligned before and after for connecting together the links which are aligned in a chain width direction so that the front inserting hole of one link corresponds to the rear inserting hole of the other link and in which the links can bend relative to each other in a length direction by relative rolling contact motions of the first and second pins and the links having different pitch lengths and the pins having different pin shapes are combined for arrangement, **characterized in that** with respect to pitch length, the links include two types of links, a link L1 having a small pitch length and a link L2 having a large pitch length and with respect to pin shape, the pins include two types of pins, a long pin (or a pin having a rolling contact surface with a large curvature) P1 and a short pin (or a pin having a rolling contact surface with a small curvature) P2, and in that at least either an arrangement having a large bending angle or an arrangement having a small bending angle minimum value is eliminated. In particular, according to a first aspect of the invention, in consideration of the magnitude of the bending angle, arrangements to be eliminated include an arrangement in which in the event that a combination of (L1, P2) comes immediately after a combination of (L1, P2) in a chain traveling direction, a combination of (L2, P2) follows, an arrangement in which in the event that the combination of (L1, P2) comes immediately after a combination of (L2, P2) in the chain traveling direction, the combination of (L2, P2) follows, an arrangement in which in the event that the combination of (L2, P1) comes immediately after a combination of (L1, P2) in the chain traveling direction, a combination of (L1, P2) follows, and an arrangement in which the combination of (L2, P2) follows directly the combination of (L1, P1) in the chain traveling direction.

When combining the two types of links (L1 and L2) having the different pitch lengths and the two types of pins (P1 and P2) having the different pin shapes, there are four combinations of (L1, P1), (L1, P2), (L2, P1) and (L2, P2). In the conventional random arrangement, the arrangement has been considered good from the viewpoint of "random" that all the four types of combinations come to appear after each combination. However, when considering the maximum bending angle of adjacent links, since a combination having a large maximum bending angle can be a cause for disadvantage with respect to durability, there is a possibility that arranging the combinations of the links and the pins at random produces an arrangement which is disadvantageous in durability. For example, assuming that (L1, P1) constitutes a reference, the combinations of (L1, P1), (L1, P2), (L2, P1) and (L2, P2) are raised as combinations to follow the reference combination. Although there exists a possibility that the noise level and durability performance are changed depending on which combination to follow, conventionally, a series of combinations like one described above has never been considered.

In the power transmission chain according to the invention, not only a reduction in noise level but also an improvement in durability are attempted to be realized by eliminating the possibility that an unfavorable combination follows the reference combination by paying attention to maximum bending angle.

Namely, with respect to pitch length, the link having a small pitch length is referred to as L1, while the link having a large pitch length is referred to as L2. With respect to pin shape, the pin which is long or of which the curvature of the rolling contact surface is referred to as P1, while the pin which is short or of which the curvature of the rolling contact surface is small is referred to as P2. With respect to combination of the links and the pins for arrangement, the possibility is avoided that the combination of (L2, P2) comes immediately after the combination of (L1, P1) in the chain traveling direction (in other words, any of the combination of (L1, P1), the combination of (L1, P2) and the combination (L2, P1), which constitute three remaining combinations, is designed to come immediately after the combination of (L1, P1) in the chain traveling direction).

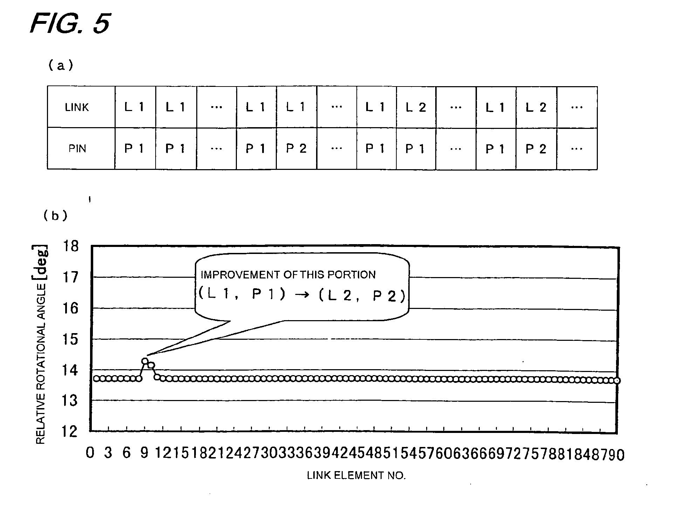

To obtain a relative rotational angle (bending angle) of the adjacent links when the links and the pins are arranged at random, for example, results are as shown in Fig. 5(b). In the figure, where the relative rotational angle is increased lies at a portion where the combination of (L2, P2) comes immediately after the combination (L1, P1) in the chain traveling direction. Since the combination of (L2, P2) does not come immediately after the combination of (L1, P1) in the chain traveling direction in other portions than that portion, it is seen that the maximum bending angle can be reduced by eliminating an occasion on which the combination of (L2, P2) comes immediately after the combination of (L1, P1) in the chain traveling direction.

When investigating portions where the maximum bending angle is increased based on the results of the analysis above, it has also been found that the maximum bending angle is also increased on, in addition to the occasion described, on an occasion where in the event that a combination of (L1, P2) comes immediately after a combination of (L1, P2) in a chain traveling direction, a combination of (L2, P2) follows, an occasion where in the event that the combination of (L1, P2) comes immediately after a combination of (L2, P2) in the chain traveling direction, the combination of (L2, P2) follows, and an occasion where in the event that the combination of (L2, P1) comes immediately after a combination of (L1, P2) in the chain traveling direction, a combination of (L1, P1) follows. Based on this the aforesaid condition is extracted.

On the other hand, in a power transmission chain according to a second aspect of the invention, in consideration of the bending angle maximum value, arrangements to be eliminated include an arrangement in which in the event that the combination of (L1, P1) comes immediately after the combination of (L2, P2) in the chain traveling direction, the combination of (L1, P2) follows, an arrangement in which in the event that the combination of (L1, P1) comes twice in succession immediately after the combination of (L2, P2) in the chain traveling direction, the combination of (L1, P2) follows, an arrangement in which in the event that the combination of (L1, P1) comes immediately after the combination of (L2, P2) in the chain traveling direction, the combination of (L2, P2) follows, and an arrangement in which in the event that the combination of (L1, P1) comes three times in succession immediately after the combination of (L2, P2), the combination of (L1, P2) follows.

When combining the two types of links (L1 and L2) having the different pitch lengths and the two types of pins (P1 and P2) having the different pin shapes, there are four combinations of (L1, P1), (L1, P2), (L2, P1) and (L2, P2). In the conventional random arrangement, the arrangement has been considered good from the viewpoint of "random" that all the four types of combinations come to appear after each combination. However, when considering the bending angle of the adjacent links, there is a possibility that arranging the combinations of the links and the pins at random produces an arrangement which is disadvantageous in durability.

In the power transmission chain according to the second aspect of the invention, not only a reduction in noise level but also an improvement in durability are attempted to be realized by eliminating the arrangements in which the unfavorable combinations follows by paying attention to bending angle maximum value. In the event that the bending angle of the adjacent links is small, although the fact that deformation is small serves advantageously in terms of durability, since the whole rolling contact surfaces of the pins are not brought into contact with each other, the small bending angle serves disadvantageously with respect to durability in that load is applied to part of the pins at all times. In addition, the small bending angle serves disadvantageously with respect to durability in that when the combinations having small bending angles follow in succession, even in the event that the pins stay between surfaces of sheaves of the pulleys, some pins do not exhibit any holding force.

Then, with respect to pitch length, the link having a small pitch length is referred to as L1, whereas the link having a large pitch length is referred to as L2. With respect to pin shape, the pin which is long or of which the curvature of the rolling contact surface is large is referred as P1, while the pin which is short or of which the curvature of the rolling contact surface is small is referred to as P2. Then, a relative rotational angle (bending angle) of the adjacent links when the links and the pins are arranged at random is obtained, and portions where the bending angle becomes smaller than a predetermined value are investigated. As a result, the aforesaid four arrangements are extracted, which include the arrangement in which in the event that the combination of (L1, P1) comes immediately after the combination of (L2, P2) in the chain traveling direction, the combination of (L1, P2) follows, the arrangement in which in the event that the combination of (L1, P1) comes twice in succession immediately after the combination of (L2, P2) in the chain traveling direction, the combination of (L1, P2) follows, the arrangement in which in the event that the combination of (L1, P1) comes immediately after the combination of (L2, P2) in the chain traveling direction, the combination of (L2, P2) follows, and the arrangement in which in the event that the combination of (L1, P1) comes three times in succession immediately after the combination of (L2, P2), the combination of (L1, P2) follows. It is seen from this that the bending angle maximum value can be increased by eliminating these arrangements.

Here, there are raised four combinations in total to be eliminated in order to increase the maximum bending angle, and hence, it will be best to eliminate all these four combinations. However, even in the event that at least one of the four can be eliminated, the durability can be improved compared with the conventional power transmission chains. Needless to say, it is preferable to eliminate more than one combination, that is, at least two or at least three of the four combinations. On the other hand, there are raised four combinations in total to reduce the bending angle maximum value, and similarly, the durability can be improved compared with the conventional power transmission chains, in the event that at least one of the combinations can be eliminated.

In the invention, although the combination of (L2, P2) may, of course, be replaced by the combination of (L1, P1) or the like in order to get rid of the arrangements to be eliminated, changing only the order of combinations enables the combinations raised to be eliminated to get out of the list of combinations or arrangements to be eliminated.

Since the two types of links having the different pitch lengths are adopted, a striking noise generation cycle is changed to be inconsistent, whereby the peak of the sound level pressure is reduced. Since the 2-level is adopted as to the lengths of the pins, the position where the pins contact the pulleys becomes the 2-level, whereby the peak of the sound pressure level is reduced. In addition, as to the rolling contact surface shapes of the first pin and the second pin, the locus of the contact position of the first and second pins is made into an involute curve, and the 2-level is adopted for the radius of a base circle of the involute, whereby the peak of the sound pressure level is reduced. As to the pins, even when the pins are classified into the long pin P1 and the short pin P2 or into the pin P1 of which the curvature of the rolling contact surface is large and the pin P2 of which the curvature of the rolling contact surface is small, the same advantage can be obtained. Normally, in the first pins and the second pins, the rolling contact surface of either of the first and second pins is formed into a flat surface, whereas the rolling contact surface of the other is formed into an involute curved surface which enables a relative rolling contact motion. However, the respective contact surfaces of the first and second pins may be formed into required curved surfaces.

One of the first and second pins is preferably fixed in a fixing portion provided in a front portion of the front inserting hole of one link and is fitted movably in a pin movable portion provided in a front portion of the rear inserting portion of the other link. The other of the first and second pins is preferably fitted movably in a pin movable portion provided in a rear portion of the front inserting portion of one link and is fixed in a pin fixing portion provided in a rear portion of the rear inserting hole in the other link.

Fixing the pin in the pin fixing portion is implemented by fitting fixation between an inner edge of the fixing portion and an outer circumferential surface of the pin based on mechanical press fitting. However, instead of this, shrink fitting or cold fitting may be adopted. Fitting fixation is preferably implemented at edges (upper and lower edges) of portions of the pin fixing portion which intersect the length direction at right angles. A pre-tension is applied in a pre-tension application step after the fitting fixation, a residual compression stress is applied to the pin fixing portion (the pin press fitting portion) of the link uniformly and properly.

In the power transmission chain of the invention, at least one of the first pin and the second pin is brought into contact with the pulley to transmit power by frictional force. In the chain in which either of the pins is brought into contact with the pulley, either of the first pin and the second pin is made to be a pin that is to be brought into contact with the pulley when the chain is used in a variously continuous transmission (hereinafter, referred to as a "first pin" or "pin"), and the other is made to be a pin that is not brought into contact with the pulley (referred to as an inter-piece or strip, and hereinafter, referred to as a "second pin" or "inter-piece").

The links are made of a spring steel or carbon tool steel. The material of the links is not limited to the spring steel or carbon tool steel but other steels such as a bearing steel may be used. In the links, the front and rear inserting portions may be formed individually as an independent through hole (a pillared link), or the front and rear inserting portions may be formed into a single through hole (a pillarless link). As a material for the pins, an appropriate steel is used which includes a bearing steel.

In this description, although one end side in the length direction of the link is referred to as front and the other end side as rear, this definition of front and rear is just for the sake of convenience. Therefore, the definition used herein does not mean that the length direction of the link does not necessarily coincide with a front-rear direction at all times.

In the power transmission chain, either of the pins (the inter-piece) is made shorter than the other pin (the pin), and end faces of the longer pin contact surfaces of half cone pulleys of the pulleys of the continuously variable transmission, whereby power is preferably transmitted by frictional force produced by the contact. Each pulley is made up of a fixed sheave having a conical sheave surface and a movable sheave having a conical sheave surface, and the chain is held between the sheave surfaces of both the sheaves. Then, by causing the movable sheave to move by a hydraulic actuator, a distance between the sheave surfaces or a chain wrap contact diameter of the continuously variable transmission is changed, whereby a smooth, stepless change-speed can be implemented.

A power transmission system according to the invention comprises a first pulley having conical sheave surfaces, a second pulley having conical sheave surfaces, and a power transmission chain which is extended between the first pulley and the second pulley, wherein the power transmission chain that has been described above is used as the power transmission chain.

This power transmission system becomes suitable for use as a continuously variable transmission for a vehicle such as a motor vehicle.

### Advantage of Invention

According to the power transmission chain and the power transmission system of the invention, the reduction in noise level is realized by eliminating the following of the unfavorable combinations by paying attention to relative collision speed, thereby making it possible to reduce the noise level with good efficiency only with the alteration of the arrangement of the links and the pins, without altering the shapes of the links and the pins.

### Brief Description of the Drawings

[Fig. 1] Fig. 1 is a plan view showing part of one embodiment of a power transmission chain of the invention.
[Fig. 2] Fig. 2 is an enlarged side view showing reference shapes of a link, a pin and an inter-piece.
[Fig. 3] Fig. 3 is an enlarged side view showing a shape of a link having a different pitch length.
[Fig. 4] Fig. 4 is an enlarged side view showing a pin having a different shape.
[Fig. 5] Fig. 5(a) shows an example of a conventional arrangement and Fig. 5(b) shows results of an analysis on relative rotation angles of the conventional arrangement.
[Fig. 6] Figs. 6(a), (b), (c) are tables showing arrangements to be eliminated.
[Fig. 7] Fig. 7 is an explanatory diagram of arrangements of portions where a bending angle minimum value, which is a target of attention of the invention, appears.
[Fig. 8] Fig. 8 (a), (b), (c) are tables showing arrangements to be eliminated.
[Fig. 9] Fig. 9 is a front view showing a condition in which the power transmission chain is wound around a pulley.
[Fig. 10] Fig. 10 is a perspective view showing a variably continuous transmission.

### Best Mode for Carrying out the Invention

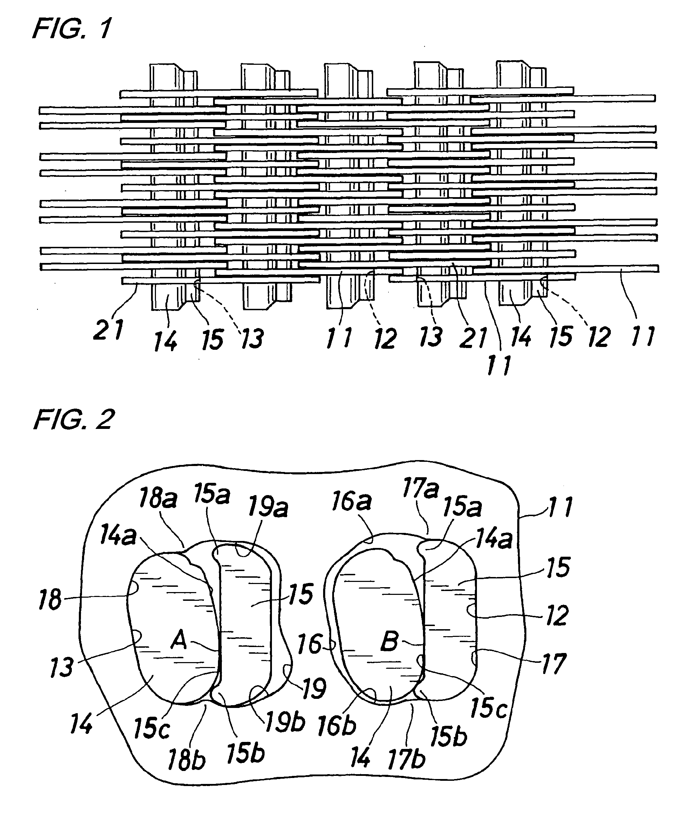

Hereinafter, referring to the drawings, an embodiment of the invention will be described. When used in the following description, "vertical" should be based on a vertical orientation in Fig. 2.

Fig. 1 shows part of a power transmission chain according to the invention, and the power transmission chain (1) includes a plurality of links (11)(21) having front and rear inserting portions (12)(13) which are provided at a predetermined interval in a length direction of the chain, and pluralities of pins (first pins) (14) and inter-pieces (second pins)(15) for connecting together the links (11)(21) which are aligned in a width direction of the chain so that the links can bend in the length direction. The inter-piece (15) is made shorter than the pin (14), and they are made to face each other in such a state that the inter-piece (15) is disposed on a front side and the pin (14) is disposed on a rear side.

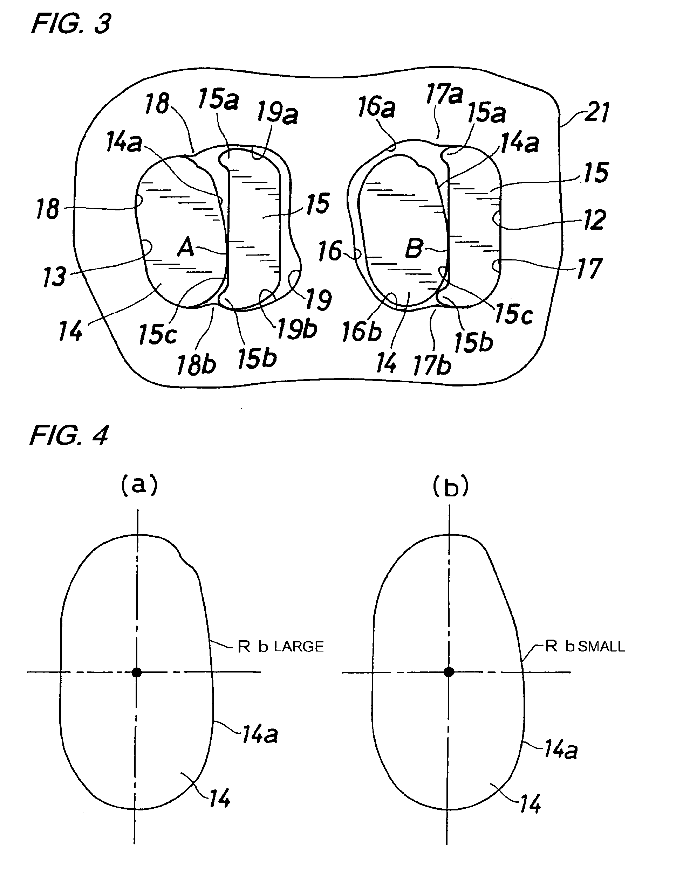

In the power transmission chain (1) of the invention, as to the links (11)(21), two types of links are prepared, one (11) shown in Fig. 2 and the other (21) shown in Fig. 3. As to a cross-sectional shape of the pin (14), two types of cross-sectional shapes are prepared, one shown in Fig. 4(a) and the other shown in Fig. 4(b).

In the chain (1), three link rows, each row comprising a plurality of links which are in the same phase in the width direction, are aligned in a traveling direction (a front-rear direction) to thereby be formed into one link unit, and a plurality of link units each comprising three link rows are connected together in the traveling direction, whereby the power transmission chain (1) is formed. In this embodiment, one link unit is made up of one link row containing nine links and two link rows each containing eight three link rows.

As is shown in Figs. 2 and 2, the front inserting portion (12) of the links (11)(21) is made up of a pin movable portion (16) in which the pin (14) is fitted movably and an inter-piece fitting portion (17) in which the inter-piece (15) is fixed. The rear inserting portion (13) is made up of a pin fixing portion (18) in which the pin (14) is fixed and an inter-piece movable portion (19) in which the inter-piece (15) is fitted movably.

Each pin (14) is made wider in the front-rear direction than the inter-piece (15), and projecting edge portions (15a)(15b) which extend towards the side of each pin (14) are provided at upper and lower edge portion of the inter-piece (15), respectively.

In connecting together the links (11)(21) which are aligned in the width direction of the chain, the links (11)(21) are overlapped so that the front inserting portion (12) of one link (11)(21) corresponds to the rear inserting portion (13) of the other link (11)(21). The pin (14) is fixed in the rear inserting portion (13) of the one link (11)(21) and is fitted movably in the front inserting portion (12) of the other link (11)(21), while the inter-piece (15) is fitted movably in the rear inserting portion (13) of the one link (11)(21) and is fixed in the front inserting portion (12) of the other link (11)(21). Then, the links (11)(21) are allowed to bend relative to each other in the length direction (the front-rear direction) by relative rolling contact motions of the pin (14) and the inter-piece (15).

Upper and lower projecting arc-shaped holding portions (18a)(18b) are provided at a boundary portion between the pin fixing portion (18) and the inter-piece movable portion (19) of the links (11)(21) which stretch, respectively, to upper and lower recessed arc-shaped guiding portions (19a)(19b) of the inter-piece movable portion (19) for holding the pin (14) fixed in the pin fixing portion (18). Similarly, upper and lower projecting arc-shaped holding portions (17a)(17b) are provided at a boundary portion between the inter-piece fixing portion (17) and the pin movable portion (16) which stretch, respectively, to upper and lower recessed arc-shaped guiding portions (16a)(16b) of the pin movable portion (16) for holding the inter-piece (15) fixed in the inter-piece fixing portion (17).

A locus of a contact position between the pin (14) and the inter-piece (15) based on the pin (14) is referred to as an involute of a circle, and in this embodiment, a rolling contact surface (14a) of the pin (14) is referred to as an involute curve having a base circle of a radius Rb and a center M in cross section, while a rolling contact surface of the inter-piece (15) is referred to as a flat surface (a linear cross-sectional shape). By doing this, when each link (11)(21) shifts from a linear area to a curvilinear area or from the curvilinear area to the linear area of the chain (1), in the front inserting portion (12), the pin (14) moves relative to the inter-piece (15) which is in the fixed condition within the pin movable portion (16) while the rolling contact surface (14a) of the pin (14) roll contacts (including a slight slip contact) the rolling contact surface (15c) of the inter-piece (15). In the rear inserting portion (13), the inter-piece (15) moves relative to the pin (14) which is in the fixed condition within the pin movable portion (19) while the rolling contact surface (15c) of the inter-piece (15) roll contacts (including a slight slip contact) the rolling contact surface (14a) of the pin (14).

In this power transmission chain (1), by the pin repeating vertical movements, polygonal vibrations are generated, and the vibrations so generated cause noise. However, since the pin (14) and the inter-piece (15) move relatively while contacting each other and the locus of the contact position between the pin (14) and the inter-piece (15) based on the pin (14) is referred to as the involute of a circle, vibrations can be reduced to thereby reduce the noise level, compared with a case where respective contact surfaces of both the pin and the inter-piece are arc-shaped surfaces.

In order to reduce noise and vibration further, two or more links (11)(21) and pins (14) which have different shapes are preferably arranged at random, whereby the striking noise generating cycle is altered to be inconsistent, so that sound energy is dispersed to different frequency bands, thereby the peak of sound pressure level being reduced.

In Figs. 2 and 3, portions denoted by reference character A and B are lines (points in the figures) where the pin (14) and the inter-piece (15) contact each other in the linear area of the chain (1), and a distance between A and B is a pitch length. When increasing the distance (pitch length) between A and B in the link (11) shown in Fig. 2, the link (21) shown in Fig. 3 results. Thus, the links (11)(21) are used which has the small pitch length and the large pitch length.

In Fig. 4, as to the radius Rb of an involute curve of the pin (14), two types of pins are used, one in Fig. 4(a) of which the radius Rb of the involute curve is large and the other in Fig. 4(b) of which the radius Rb of the involute curve is small. These two types of pins (14) can be inserted through either of the link (11) in Fig. 2 which has the long pitch length and the link (21) in Fig. 3 which has the short pitch length. By combining these two types of pitch lengths of the link (11) (hereinafter, the small pitch length is referred to as "L1" while the large pitch length is referred to as "L2") with the two types of pin shapes (hereinafter, the large Rb is referred to as "P1" while the small Rb is referred to as "P2"), there can be produced four types of combinations of (L1, P1), (L1, P2), (L2, P1) and (L2, P2).

### (First Embodiment)

The conventional random arrangement is based on the random arrangement of the aforesaid four combinations, and it is considered good that all the four types of combinations come to appear after each combination. However, when considering the maximum bending angle of the adjacent links, since a combination having a large maximum bending angle can be a cause for a reduction in reliability, adopting the random arrangement simply will not possibly be optimum when considering noise level and durability together. Then, not only the reduction in noise level but also the improvement in durability can be realized by eliminating a possibility of an unfavorable combination following the reference combination by paying attention to maximum bending angle as below.

Fig. 5(a) shows an example of a conventional arrangement, in which all the four combinations appear after a combination of (L1, P2). A relative rotational angle (bending angle) of the adjacent links (11)(21) of the conventional arrangement was obtained and is now shown in Fig. 5(b). In Fig. 5(b), where the relative rotational angle is increased is a portion where a combination of (L2, P2) follows or comes after a combination of (L1, P1). In the other portions, a combination of (L1, P1) a combination of (L1, P2) or a combination of (L2, P1), which are combinations other than the combination of (L2, P2), come after or follow the combination of (L1, P1). It is seen from the results of the analysis that combinations resulting in a large maximum bending angle can be reduced by eliminating the possibility that the combination of (L2, P2) follows the combination of (L1,P1).

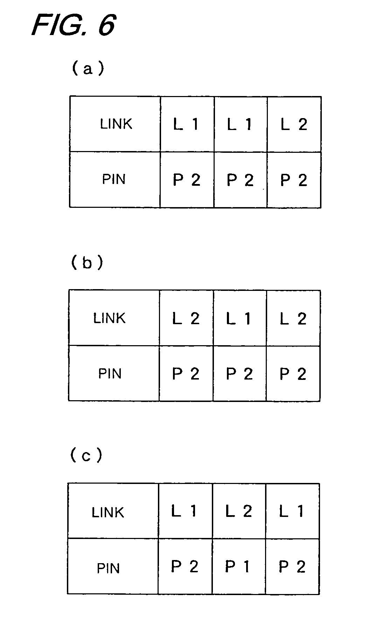

A further analysis was carried out from the viewpoint of what has been described above to investigate combinations resulting in a large maximum bending angle. It has been found from the analysis that the maximum bending angle is increased as shown in Fig. 5(b) at portions where arrangements shown in Figs. 6(a), (b), (c) occur (the results of the analysis being omitted). Namely, it is seen that the maximum bending angle, which disadvantageously deteriorates durability, can be reduced by eliminating those arrangements. Since the maximum bending angle is increased when the arrangements shown in Figs. 6(a), (b), (c) occur continuously in those orders, only changing the order of arrangements between a second arrangement and a third arrangement, a risk of the maximum bending angle being increased can be eliminated.

### (Second Embodiment)

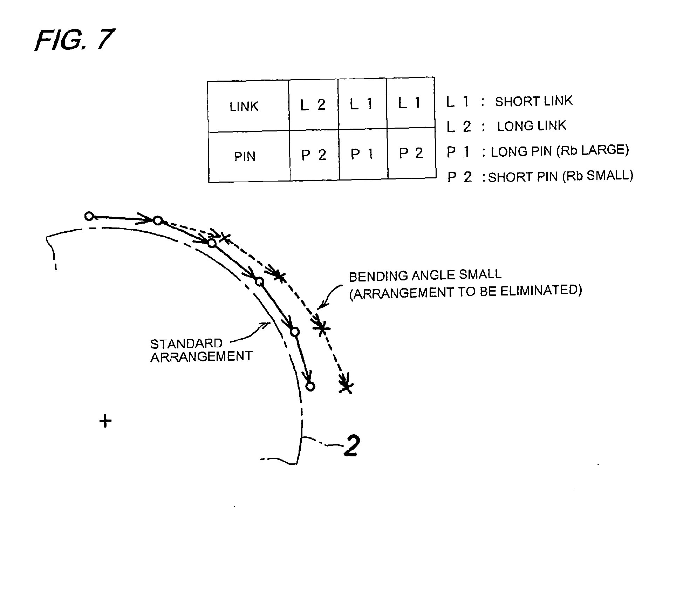

On the other hand, as is shown in Fig. 7, when a curved line is formed by representing a line connecting contact positions of the adjacent first pins (14) with the mating pins by a single arrow, there appear a curved line (indicated by solid lines and circles) having an appropriate bending angle for the contact positions to follow a circumferential direction and in contrast, a curved line (indicated by broken lines and crosses) having a small bending angle. As an example of an arrangement in which the bending angle decreases, the arrangement is raised in which in the event that the combination of (L1, P1) comes immediately after the combination of (L2, P2) in the chain traveling direction, the combination of (L1, P2) follows. A bending angle which is too small can serve to reduce the durability. Therefore, arranging simply the combinations at random could not be optimum when considering noise level and durability together. Then, not only the reduction in noise level but also the improvement in durability can be realized by eliminating a possibility of an unfavorable combination following the reference combination by paying attention to bending angle minimum value.

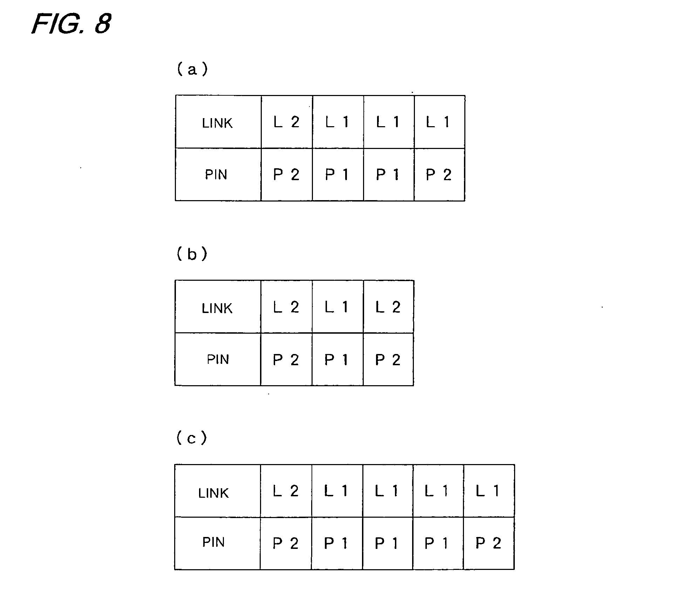

Arrangements shown in Fig. 8 are such that a relationship between link elements and relative rotational angles with respect to various arrangements is analyzed to extract arrangements other than those described above in which the bending angle is reduced. (a) denotes an arrangement in which in the event that the combination of (L1, P1) comes twice in succession immediately after the combination of (L2, P2) in the chain traveling direction, the combination of (L1, P2) follows, (b) denotes an arrangement in which in the event that the combination of (L1, P1) comes immediately after the combination of (L2, P2) in the chain traveling direction, the combination of (L2, P2) follows, and (c) denotes an arrangement in which in the event that the combination of (L1, P1) comes three times in succession immediately after the combination of (L2, P2) in the chain traveling direction, the combination of (L1, P2) follows. These arrangements all involve bending angles indicated by broken lines in Fig. 7, and by eliminating these arrangements, too small bending angles which advantageously deteriorate durability can be eliminated. Since the bending angle is reduced when the arrangements shown in Figs. 7 and 8(a), (b), (c) occur continuously in those orders, only changing the order of arrangements between a second arrangement and a third arrangement, for example, a risk of the bending angle being decreased can be eliminated.

In the first and second embodiments, although as to the shapes of the pins, the pin P1 of which the curvature of the rolling contact surface is large and the pin P2 of which the curvature of the rolling contact surface is small are illustrated, even in the event that the two types of pins, the long pin and the short pin, are used, by the long pin being referred to as P1 and the short pin being referred to as P2, the same bending angle reducing effect as that described above can be obtained.

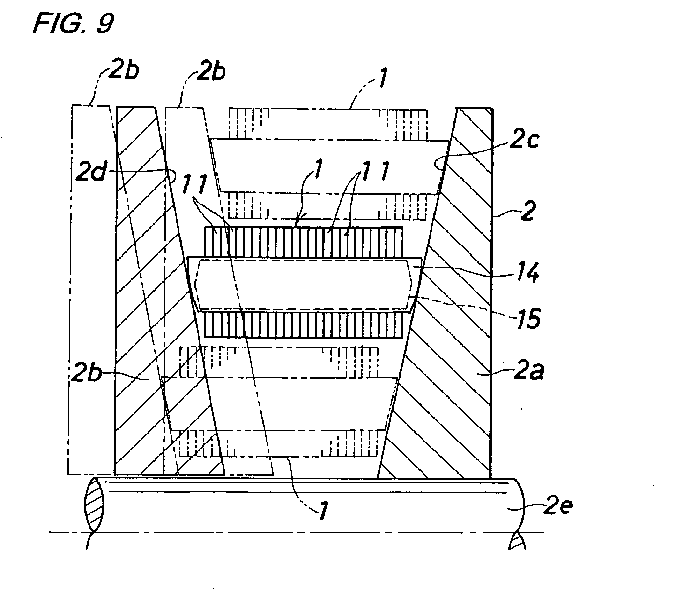

This power transmission chain (1) is used in a continuously variable V-type pulley transmission shown in Fig. 10. As this occurs, as is shown in Fig. 9, in such a state that end faces of the inter-piece 15 do not contact respective conical sheave surfaces (2c)(2d) of a fixed sheave (2a) and a movable sheave (2b) of a pulley (2) having a pulley shaft (2e), end faces of the drive pin (14) contact the conical sheave surfaces (2c)(2d) of the pulley (2), and power is transmitted by frictional force produced by the contact above.

When the movable pulley half (2d) of the drive pulley 2 which is situated in a position indicated by solid lines is caused to move towards or away from the fixed sheave (2a), the wrap contact diameter of the drive pulley (2) is increased when the movable sheave (2b) moves towards the fixed sheave (2a) and is decreased when the movable sheave (2b) moves away from the fixed sheave (2a) as indicated by chain lines in Fig. 7. In a driven pulley (3), although illustration is omitted, when a movable sheave thereof moves in an opposite direction to the movable sheave (2b) of the drive pulley (2) to thereby increase the wrap contact diameter of the drive pulley (2), a wrap contact diameter of the driven pulley (3) is decreased, and conversely, when the wrap contact diameter of the drive pulley (2) is decreased, the wrap contact diameter of the driven pulley (3) is increased. As a result, based on a condition in which a one to one speed ratio (an initial value) results, an U/D (under drive) condition in which the wrap contact diameter of the drive pulley (2) is at minimum while the wrap contact diameter of the driven pulley(3) is at maximum is obtained, and an O/D (over drive) condition in which the wrap contact diameter of the drive pulley (2) is at maximum while the wrap contact diameter of the driven pulley (3) is at minimum.

## Claims

1. A power transmission chain comprising a plurality of links each having front and rear inserting portions through which pins are inserted and a plurality of first pins and a plurality of second pins which are aligned before and after for connecting together the links which are aligned in a chain width direction so that the front inserting hole of one link corresponds to the rear inserting hole of the other link and in which the links can bend relative to each other in a length direction by relative rolling contact motions of the first and second pins and the links having different pitch lengths and the pins having different pin shapes are combined for arrangement, **characterized in that** with respect to pitch length, the links include two types of links, a link L1 having a small pitch length and a link L2 having a large pitch length and with respect to pin shape, the pins include two types of pins, a long pin or a pin having a rolling contact surface with a large curvature P1 and a short pin or a pin having a rolling contact surface with a small curvature P2, and **in that** at least either an arrangement having a large bending angle or an arrangement having a small bending angle minimum value is eliminated.

2. A power transmission chain as set forth in Claim 1, **characterized in that** as to pin shape, the pins include two types including a long pin P1 and a short pin P2, and **in that** at least one of arrangements is eliminated which include an arrangement in which in the event that a combination of (L1, P2) comes immediately after a combination of (L1, P2) in a chain traveling direction, (L2, P2) follows, an arrangement in which the combination of (L1, P2) comes immediately after the combination of (L2, P2) in the chain traveling direction, (L2, P2) follows, an arrangement in which a combination of (L2, P1) comes immediately after the combination of (L1, P2) in the chain traveling direction, (L1, P2) follows, and an arrangement in which (L2, P2) follows directly (L1, P1) in the chain traveling direction.

3. A power transmission chain as set forth in Claim 1, **characterized in that** as to pin shape, the pins include two types including a pin P1 of which a curvature of a rolling contact surface is large and a pin P2 of which a curvature of a rolling contact surface is small, and **in that** at least one of arrangements is eliminated which include an arrangement in which in the event that a combination of (L1, P2) comes immediately after a combination of (L1, P2) in a chain traveling direction, (L2, P2) follows, an arrangement in which the combination of (L1, P2) comes immediately after the combination of (L2, P2) in the chain traveling direction, (L2, P2) follows, an arrangement in which a combination of (L2, P1) comes immediately after the combination of (L1, P2) in the chain traveling direction, (L1, P2) follows, and an arrangement in which (L2, P2) follows directly (L1, P1) in the chain traveling direction.

4. A power transmission chain as set forth in Claim 1, **characterized in that** as to pin shape, the pins include two types including a long pin P1 and a short pin P2, and **in that** at least one of arrangements is eliminated which include an arrangement in which in the event that a combination of (L1, P1) comes immediately after a combination of (L2, P2) in a chain traveling direction, (L1, P2) follows, an arrangement in which the combination of (L1, P1) comes twice in succession immediately after the combination of (L2, P2) in the chain traveling direction, the combination of (L1, P2) follows, an arrangement in which the combination of (L1, P1) comes immediately after the combination of (L2, P2) in the chain traveling direction, the combination of (L2, P2) follows, and an arrangement in which the combination of (L1, P1) comes three times in succession immediately after the combination of (L2, P2) in the chain traveling direction, the combination of (L1, P2) follows.

5. A power transmission chain as set forth in Claim 1, **characterized in that** as to pin shape, the pins include two types including a pin P1 of which a curvature of a rolling contact surface is large and a pin P2 of which a curvature of a rolling contact surface is small, and **in that** at least one of arrangements is eliminated which include an arrangement in which in the event that a combination of (L1, P1) comes immediately after a combination of (L2, P2) in a chain traveling direction, (L1, P2) follows, an arrangement in which the combination of (L1, P1) comes twice in succession immediately after the combination of (L2, P2) in the chain traveling direction, the combination of (L1, P2) follows, an arrangement in which the combination of (L1, P1) comes immediately after the combination of (L2, P2) in the chain traveling direction, the combination of (L2, P2) follows, and an arrangement in which the combination of (L1, P1) comes three times in succession immediately after the combination of (L2, P2) in the chain traveling direction, the combination of (L1, P2) follows.

6. A power transmission system comprising a first pulley having conical sheave surfaces, a second pulley having conical sheave surfaces and a power transmission chain wound around the first and second pulleys, **characterized in that** the power transmission chain is the power transmission chain set forth in any of Claims 1 to 5.
